# EUROPEAN PATENT APPLICATION

(11) **EP 4 307 421 A1**
(43) Date of publication of application: **17.01.2024**
(21) Application number: 21929438.6
(22) Date of filing: 12.03.2021
(51) Int. Cl.: H01M 10/0562, H01M 4/13, H01M 4/134, H01M 10/058, H01M 50/198

(54) **ALL-SOLID-STATE BATTERY**

(71) Applicant: NISSAN MOTOR CO., LTD., Kanagawa 221-0023 (JP)
(72) Inventor: TAGUCHI, Kaishi, Atsugi-shi, Kanagawa 243-0123 (JP); ONO, Yoshitaka, Atsugi-shi, Kanagawa 243-0123 (JP); OGAWA, Tomaru, Atsugi-shi, Kanagawa 243-0123 (JP); YASUDA, Hirofumi, Atsugi-shi, Kanagawa 243-0123 (JP)
(74) Representative: Grünecker Patent- und Rechtsanwälte PartG mbB
(86) International application number: PCT/JP2021/010167
(87) International publication number: WO 2022/190378

(57) **Abstract**

An all-solid-state battery including, a negative electrode current collector foil, a solid electrolyte layer, and a positive electrode layer, wherein the negative electrode current collector foil is connected to an insulating first elastic body having a frame shape that follows and surrounds a shape of a peripheral edge of the solid electrolyte layer, the first elastic body is connected to a main surface of the solid electrolyte layer or a side surface of the solid electrolyte layer to form an internal space surrounded by the solid electrolyte layer, the negative electrode current collector foil, and the first elastic body, the solid electrolyte layer is disposed such that an outer shape thereof includes an outer shape of the positive electrode layer inside in plan view, and when the all-solid-state battery is in a fully discharged state, the internal space is filled with a negative electrode layer having electrical conductivity and/or lithium ion conductivity.

## Description

### TECHNICAL FIELD

The present invention relates to an all-solid-state battery.

### BACKGROUND ART

WO2018/ 168550A1 discloses an all-solid-state battery that includes a battery element member including a negative electrode current collector foil, a solid electrolyte layer, a positive electrode layer, and a positive electrode current collector foil, in which a side surface of the battery element member is covered with an insulating material. Accordingly, the growth of lithium metal from a side surface of a negative electrode is prevented, and a decrease in discharge capacity is prevented.

### SUMMARY OF INVENTION

However, in WO2018/ 168550A1, since the solid electrolyte layer and the insulating material are materials different from each other, an interface is present between the solid electrolyte layer and the insulating material, lithium metal (lithium dendrite) deposited when the all-solid-state battery is charged may reach the positive electrode layer through the interface, and the all-solid-state battery may be short-circuited. By binding the side surface of the battery element member with the insulating material, deposition of the lithium metal on the negative electrode current collector foil during charging may be inhibited, and the discharge capacity may decrease.

Therefore, an object of the present invention is to provide an all-solid-state battery in which a decrease in discharge capacity is prevented and a short circuit is reduced by facilitating the deposition of lithium metal on a negative electrode current collector foil during charging.

An all-solid-state battery according to one embodiment of the present invention is a all-solid-state battery including, a negative electrode current collector foil, a solid electrolyte layer, and a positive electrode layer, wherein the negative electrode current collector foil is connected to an insulating first elastic body having a frame shape that follows and surrounds a shape of a peripheral edge of the solid electrolyte layer, the first elastic body is connected to a main surface of the solid electrolyte layer or a side surface of the solid electrolyte layer to form an internal space surrounded by the solid electrolyte layer, the negative electrode current collector foil, and the first elastic body, the solid electrolyte layer is disposed such that an outer shape thereof includes an outer shape of the positive electrode layer inside in plan view, and when the all-solid-state battery is in a fully discharged state, the internal space is filled with a negative electrode layer having electrical conductivity and/or lithium ion conductivity.

### BRIEF DESCRIPTION OF DRAWINGS

[FIG. 1] FIG. 1 is a cross-sectional view of an all-solid-state battery according to a first embodiment.
[FIG. 2] FIG. 2 is a cross-sectional view of the all-solid-state battery according to the first embodiment, in which a left side of a broken line extending vertically in FIG. 2 shows a fully discharged state and a right side shows a fully charged state.
[FIG. 3] FIG. 3 is a cross-sectional view of an all-solid-state battery according to a modification of the first embodiment, in which a left side of a broken line extending vertically in FIG. 3 shows a fully discharged state and a right side shows a fully charged state.
[FIG. 4] FIG. 4 is a cross-sectional view of an all-solid-state battery according to a second embodiment, in which a left side of a broken line extending vertically in FIG. 4 shows a fully discharged state and a right side shows a fully charged state.
[FIG. 5] FIG. 5 is a cross-sectional view of an all-solid-state battery according to a third embodiment, in which a left side of a broken line extending vertically in FIG. 5 shows a fully discharged state and a right side shows a fully charged state.
[FIG. 6] FIG. 6 is a cross-sectional view of an all-solid-state battery according to a fourth embodiment.
[FIG. 7] FIG. 7 is a cross-sectional view of an all-solid-state battery according to a comparative example, in which a left side of a broken line extending vertically in FIG. 7 shows a fully discharged state and a right side shows a fully charged state.

### DESCRIPTION OF EMBODIMENTS

### [Outline of Present Embodiment]

An all-solid-state battery 100 according to the present embodiment will be described.

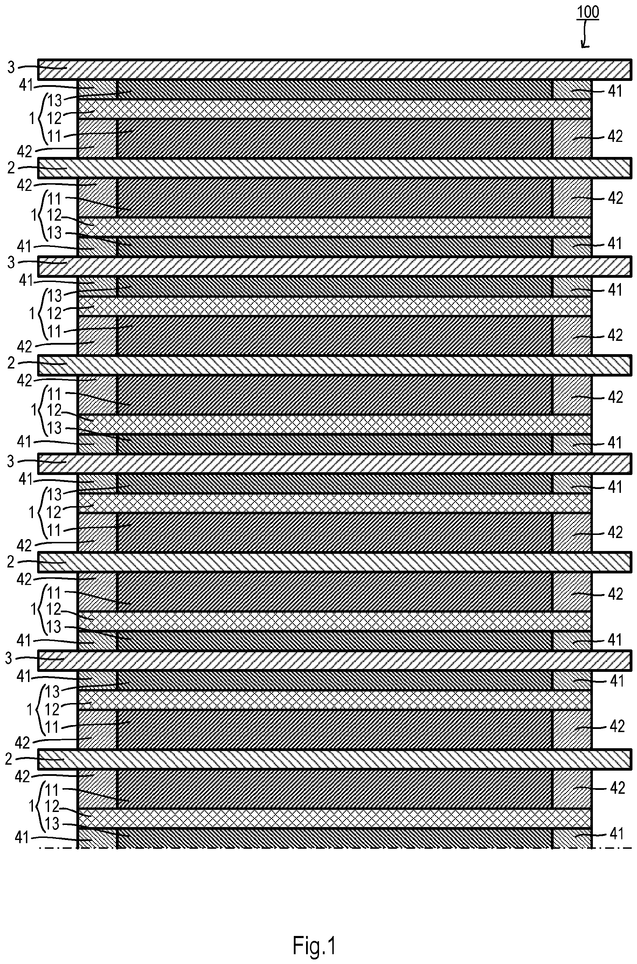

FIG. 1 is a cross-sectional view of the all-solid-state battery 100 according to a first embodiment. The all-solid-state battery 100 according to the first embodiment is a secondary battery that can be charged and discharged a plurality of times. The all-solid-state battery 100 is a so-called stacked all-solid-state battery 100 inside which a plurality of negative electrode current collector foils 3, power generation element portions 1, and positive electrode current collector foils 2, which will be described below, are stacked and accommodated in a state of being sealed with a laminate layer (not shown), which is a battery exterior material. By adopting the stacked configuration, the battery can be made compact and have a high capacity.

The all-solid-state battery 100 is formed by pressing negative electrode current collector foils 3, positive electrode current collector foils 2, and power generation element portions 1 in a stacking direction. The negative electrode current collector foils 3 and the positive electrode current collector foils 2 are alternately stacked. The power generation element portion 1 is interposed between the negative electrode current collector foil 3 and the positive electrode current collector foil 2 which are adjacent to each other in the stacking direction. The power generation element portion 1 has a stacked structure including a negative electrode layer 13, a solid electrolyte layer 12, and a positive electrode layer 11.

In the power generation element portions 1 shown in FIG. 1, the power generation element portion 1 whose lower portion is connected to the positive electrode current collector foil 2 and upper portion is connected to the negative electrode current collector foil 3 is formed by stacking the positive electrode layer 11, the solid electrolyte layer 12, and the negative electrode layer 13 in this order from the bottom. In addition, the power generation element portions 1 shown in FIG. 1, the power generation element portion 1 whose lower portion is connected to the negative electrode current collector foil 3 and upper portion is connected to the positive electrode current collector foil 2 is formed by stacking the negative electrode layer 13, the solid electrolyte layer 12, and the positive electrode layer 11 in this order from the bottom.

As will be described in detail later, a first elastic body 41 and a second elastic body 42 are disposed to cover a side surface of the power generation element portion 1.

In the all-solid-state battery 100 according to the first embodiment, all the power generation element portions 1 can be electrically connected in parallel by connecting the negative electrode current collector foils 3 in parallel and connecting the positive electrode current collector foils 2 in parallel. In the present embodiment, the negative electrode current collector foil 3, the power generation element portion 1, and the positive electrode current collector foil 2 do not need to be stacked in a plurality of layers, and may be a single layer.

The all-solid-state battery 100 according to the first embodiment is formed in a circular or rectangular sheet shape, for example, in a state before being accommodated in the battery exterior material. An appearance of the all-solid-state battery 100 according to the present embodiment and an electrical connection state (electrode structure) inside the all-solid-state battery 100 are not particularly limited.

The appearance of the all-solid-state battery 100 may be a circle, an ellipse, or a rectangular shape in plan view. Alternatively, the all-solid-state battery 100 may have a cylindrical shape in which a single layer or a plurality of layers of the power generation element portions 1 are wound and accommodated. An electrode structure of the all-solid-state battery 100 may be a so-called non-bipolar type (internal parallel connection type) or a bipolar type (internal serial connection type). That is, a mode of the all-solid-state battery 100 other than a configuration described below is not particularly limited, whether known or not.

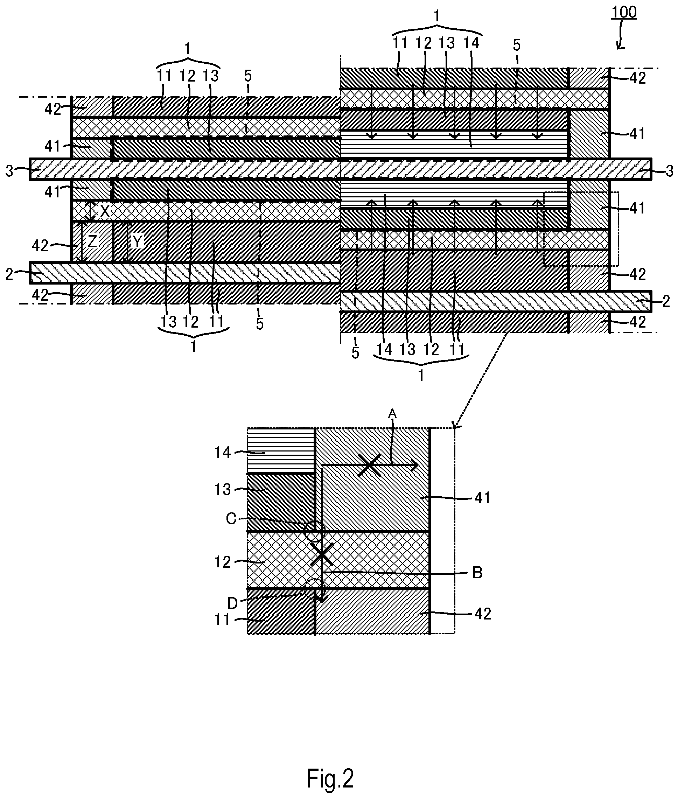

FIG. 2 is a cross-sectional view of the all-solid-state battery 100 according to the first embodiment, in which a left side of a broken line extending vertically in FIG. 2 shows a fully discharged state and a right side shows a fully charged state. Here, the fully discharged state refers to a state in which an open-circuit voltage of the all-solid-state battery 100 is equal to or lower than a predetermined lower-limit voltage, and the fully charged state refers to a state in which the open-circuit voltage of the all-solid-state battery 100 is equal to or higher than a predetermined reference voltage, which is a voltage higher than the lower-limit voltage.

The positive electrode current collector foil 2 is a thin plate made of a metal such as aluminum (Al). The negative electrode current collector foil 3 is a thin plate made of a metal such as stainless steel (SUS) or copper (Cu).

As described above, the power generation element portion 1 is interposed between the negative electrode current collector foil 3 and the positive electrode current collector foil 2, and has a stacked structure including the positive electrode layer 11, the solid electrolyte layer 12, and the negative electrode layer 13. The power generation element portion 1 has an area smaller than areas of the positive electrode current collector foil 2 and the negative electrode current collector foil 3 in plan view, and is disposed to be inside the outer shape of the positive electrode current collector foil 2 and the outer shape of the negative electrode current collector foil 3.

The positive electrode layers 11 are formed on both main surfaces of the positive electrode current collector foil 2 (in the case of a single layer, a main surface of the positive electrode current collector foil 2 facing the negative electrode current collector foil 3). Each positive electrode layer 11 is preferably formed using, for example, NMC 811 (lithium nickel cobalt manganese oxide) as a main raw material. The positive electrode layer 11 preferably contains a positive electrode active material containing sulfur. The type of the positive electrode active material containing sulfur is not particularly limited, and examples thereof include particles or thin films of an organic sulfur compound or an inorganic sulfur compound in addition to a sulfur simple substance (S). The positive electrode active material may be any material capable of releasing lithium ions during charging and absorbing lithium ions during discharging by utilizing an oxidation-reduction reaction of sulfur.

The solid electrolyte layer 12 is a layer containing a solid electrolyte as a main component and interposed between the negative electrode layer 13 and the positive electrode layer 11. Examples of the solid electrolyte include a sulfide solid electrolyte and an oxide solid electrolyte, and the sulfide solid electrolyte is preferred. Examples of the sulfide solid electrolyte include an LPS-based material (for example, argyrodite (LiePSsCl)) and an LGPS-based material (for example, Li₁₀GeP₂S₁₂).

The negative electrode layers 13 are disposed on both main surfaces of the negative electrode current collector foil 3 (in the case of a single layer, a main surface of the negative electrode current collector foil 3 facing the positive electrode current collector foil 2). The negative electrode layer 13 fills an internal space 5 to be described later. The negative electrode layer 13 is made of a material having electrical conductivity and/or lithium ion conductivity, for example, a lithium alloy or a negative electrode active material containing lithium metal. Stainless steel (SUS), copper (Cu), or carbon black (fine particles of carbon) can also be applied to the negative electrode layer 13.

The solid electrolyte layer 12 is disposed such that an outer shape thereof includes an outer shape of the positive electrode layer 11 and an outer shape of the negative electrode layer 13 inside in plan view.

As shown in FIG. 2 (and FIG. 1), the insulating first elastic body 41 and the insulating second elastic body 42 are disposed to cover the side surface of the power generation element portion 1.

The first elastic body 41 is disposed to be sandwiched between the main surface of the negative electrode current collector foil 3 and the main surface of the solid electrolyte layer 12 on a side of the negative electrode current collector foil 3. The first elastic body 41 has a frame shape that follows and surrounds an outer shape of a peripheral edge of the solid electrolyte layer 12. That is, if the solid electrolyte layer 12 is circular in plan view, the solid electrolyte layer 12 has a circular ring shape, and if the solid electrolyte layer 12 is rectangular in plan view, the solid electrolyte layer 12 has a rectangular frame shape.

Therefore, in the all-solid-state battery 100 according to the first embodiment, the internal space 5 surrounded by the negative electrode current collector foil 3, the solid electrolyte layer 12, and the first elastic body 41 is formed inside the first elastic body 41 in plan view, and the internal space 5 is filled with the negative electrode layer 13 and a lithium metal layer 14 to be described later.

A material used for the first elastic body 41 is preferably an insulating material of 400 GPa or less, and more preferably a material of 10 GPa or less. Examples of the material of the first elastic body 41 include aluminum oxide (bulk) (370 GPa), zirconia (200 GPa), polyethylene terephthalate (PET) (4 GPa), Kapton (registered trademark) (3.3 GPa), an epoxy resin (2.4 GPa), polytetrafluoroethylene (PTFE) (0.5 GPa), and rubber (natural rubber, synthetic rubber) (0.1 GPa).

Each second elastic body 42 is disposed to be sandwiched between the main surface of the positive electrode current collector foil 2 and the main surface of the solid electrolyte layer 12 on a positive electrode current collector foil 2 side. Similarly to the first elastic body 41, the second elastic body 42 has a frame shape that follows and surrounds the outer shape of a peripheral edge of the solid electrolyte layer 12. Similarly to the first elastic body 41, a material for the second elastic body 42 is preferably an insulating material of 400 GPa or less, and any of the materials listed above can be applied.

When the all-solid-state battery 100 according to the first embodiment is charged (fully charged), lithium ions in the positive electrode layer 11 pass through the solid electrolyte layer 12 and the negative electrode layer 13, and are deposited as the lithium metal layer 14 between the negative electrode current collector foil 3 and the negative electrode layer 13. The lithium metal layer 14 is in contact with the negative electrode layer 13 and the negative electrode current collector foil 3. When discharging is started in the all-solid-state battery 100 after charging, lithium ions pass through the solid electrolyte layer 12 from the lithium metal layer 14 (and the negative electrode layer 13) and are occluded in the positive electrode layer 11, and the lithium metal layer 14 disappears upon complete discharge. In the fully discharged state, the negative electrode layer 13 is electrically connected to the negative electrode current collector foil 3 by being in contact with the negative electrode current collector foil 3. In the fully charged state or a constant charged state that is less than the fully charged state, the negative electrode layer 13 is electrically connected to the negative electrode current collector foil 3 via the lithium metal layer 14.

At this time, a height of the first elastic body 41 extends and retracts in accordance with a change in thickness of the lithium metal layer 14. In particular, since an elastic modulus of the lithium metal is 5 GPa, by applying a material having an elastic modulus of 5 GPa or less as the material of the first elastic body 41, the first elastic body 41 is softer than the lithium metal layer 14, and followability of the first elastic body 41 in a height direction (a thickness direction of the all-solid-state battery 100) is improved.

### [Comparative Example and First Embodiment]

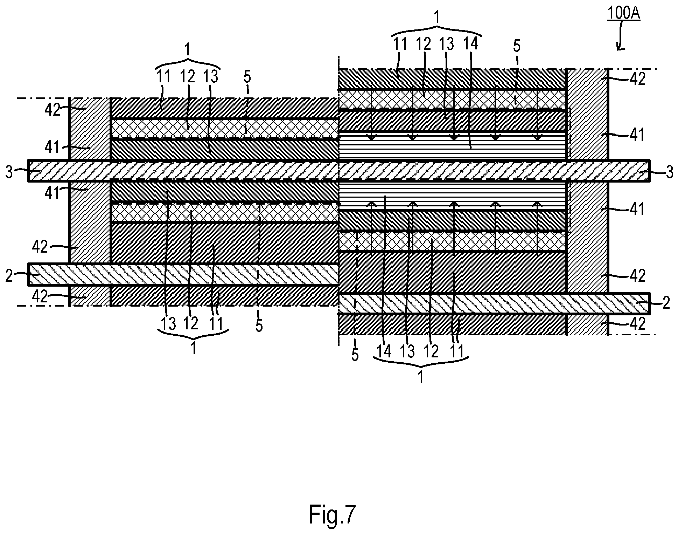

FIG. 7 is a cross-sectional view of an all-solid-state battery 100A according to a comparative example, in which a left side of a broken line extending vertically in FIG. 7 shows a fully discharged state and a right side shows a fully charged state.

A structure of the all-solid-state battery 100A according to the comparative example is similar to that of the all-solid-state battery 100 according to the first embodiment, but a side surface of the negative electrode layer 13, a curved surface of the solid electrolyte layer 12, and a side surface of the positive electrode layer 11 form substantially the same curved surface. An elastic body 43 covers the side surfaces of the power generation element portion 1.

In the all-solid-state battery 100A according to the comparative example, when charging is performed, the lithium metal layer 14 is also formed between the negative electrode current collector foil 3 and the negative electrode layer 13. By applying, for example, the same material as that of the first elastic body 41 as the material of the elastic body 43, a height of the elastic body 43 can be changed in accordance with the change in thickness of the lithium metal layer 14.

However, in the all-solid-state battery 100A according to the comparative example, as described above, since the side surface of the negative electrode layer 13, the side surface of the solid electrolyte layer 12, and the side surface of the positive electrode layer 11 form substantially the same curved surface, there is no step at an interface between the power generation element portion 1 and the elastic body 43.

Therefore, when charging and discharging are repeated in the all-solid-state battery 100, lithium metal (lithium dendrite) deposited as the lithium metal layer 14 may grow to the cathode layer 11 through the interface, and the negative electrode layer 13 and the positive electrode layer 11 may be short-circuited.

On the other hand, as shown in FIG. 2, in the all-solid-state battery 100 according to the first embodiment, the first elastic body 41 is disposed to be sandwiched between the main surface of the negative electrode current collector foil 3 and the main surface of the solid electrolyte layer 12, and the internal space 5 having the side surface of the negative electrode layer 13 as an inner wall is formed.

Accordingly, a space (the internal space 5) in which the lithium metal can be deposited between the negative electrode current collector foil 3 and the negative electrode layer 13 can be formed according to a charge amount of the all-solid-state battery 100, and thus a decrease in discharge capacity of the all-solid-state battery 100 can be prevented.

Since the lithium metal (lithium dendrite) deposited as the lithium metal layer 14 between the negative electrode current collector foil 3 and the negative electrode layer 13 is confined in the internal space 5, the growth of the lithium metal (lithium dendrite) outside the outer shape of the negative electrode layer 13 in plan view can be reduced. That is, by reducing the movement of the lithium metal as indicated by an arrow (A) in the enlarged view of FIG. 2, a decrease in discharge capacity of the all-solid-state battery 100 can be prevented.

The first elastic body 41 extends in accordance with a deposition amount of the lithium metal (the thickness of the lithium metal layer 14) to form the internal space 5 in which the lithium metal can be deposited, and by reducing the inhibition of the deposition of the lithium metal accordingly, the decrease in discharge capacity of the all-solid-state battery 100 can be prevented.

In the all-solid-state battery 100 according to the first embodiment, the solid electrolyte layer 12 is disposed to protrude outward from the negative electrode layer 13 in plan view, and the first elastic body 41 is disposed to be sandwiched between the main surface of the negative electrode current collector foil 3 and the main surface of the solid electrolyte layer 12 at a position protruding outward from the negative electrode layer 13 in plan view. Accordingly, even when the lithium metal (lithium dendrite) enters an interface between the first elastic body 41 and the negative electrode layer 13, the growth of the lithium metal is blocked by the solid electrolyte layer 12. That is, as indicated by an arrow (B) in the enlarged view of FIG. 2, the lithium metal can be restricted from linearly moving from the negative electrode layer 13 to the positive electrode layer 11.

The first elastic body 41 forms an interface between the first elastic body 41 and the lithium metal layer 14, an interface between the first elastic body 41 and the negative electrode layer 13, and an interface between the first elastic body 41 and the solid electrolyte layer 12. Here, a current density at a portion of the solid electrolyte layer 12 outside the negative electrode layer 13 in plan view is significantly lower than a current density at a portion of the solid electrolyte layer 12 inside the negative electrode layer 13 in plan view. Accordingly, a potential gradient in a plane direction of the interface between the first elastic body 41 and the solid electrolyte layer 12 is significantly smaller than a potential gradient in a height direction of the interface between the first elastic body 41 and the lithium metal layer 14 and a potential gradient in a height direction of the interface between the first elastic body 41 and the negative electrode layer 13. Accordingly, even when the lithium metal (lithium dendrite) grows to a junction position of the interface between the first elastic body 41 and the negative electrode layer 13 and the interface between the first elastic body 41 and the solid electrolyte layer 12, the lithium metal (lithium dendrite) can be prevented from entering the interface between the first elastic body 41 and the solid electrolyte layer 12. As described above, the short circuit between the negative electrode layer 13 and the positive electrode layer 11 can be reduced, and cycle durability of charge and discharge of the all-solid-state battery 100 can be improved.

Furthermore, in the all-solid-state battery 100 according to the first embodiment, the second elastic body 42 is disposed to cover the side surface of the positive electrode layer 11. Accordingly, it is possible to prevent deposition of the lithium metal on the side surface of the positive electrode layer 11 during discharging and prevent a decrease in discharge capacity due to the deposition.

A thickness of the positive electrode layer 11 may be reduced by releasing lithium ions occluded in the positive electrode layer 11 during charging toward the negative electrode layer 13, and the thickness of the positive electrode layer 11 may be increased by absorbing lithium ions moved from a negative electrode layer 13 side during discharging. A height of the second elastic body 42 can extend and retract in accordance with a change in thickness of the positive electrode layer 11.

The solid electrolyte layer 12 is disposed to protrude not only from the negative electrode layer 13 but also from the positive electrode layer 11 in plan view. Accordingly, a potential gradient at the interface between the first elastic body 41 and the solid electrolyte layer 12 can be further reduced, and the lithium metal (lithium dendrite) can be further prevented from entering the interface between the first elastic body 41 and the solid electrolyte layer 12.

Here, as shown in FIG. 2, when a thickness of a portion of the solid electrolyte layer 12 outside the positive electrode layer 11 and the negative electrode layer 13 in plan view is defined as X and the thickness of the positive electrode layer 11 is defined as Y, a height Z of the second elastic body 42 is set to satisfy Y ≤ Z < X + Y. That is, the second elastic body 42 is in contact with the solid electrolyte layer 12, and the portion of the solid electrolyte layer 12 outside the positive electrode layer 11 and the negative electrode layer 13 in plan view is sandwiched between the positive electrode layer 11 and the negative electrode layer 13. Accordingly, it is possible to reduce shear stress applied to a boundary between the portion of the solid electrolyte layer 12 outside the positive electrode layer 11 and the negative electrode layer 13 and the portion of the solid electrolyte layer 12 inside the positive electrode layer 11 and the negative electrode layer 13 in plan view. Specifically, as shown in the enlarged view of FIG. 2, shear stress (tensile stress) applied to a portion of the solid electrolyte layer 12 surrounded by circular broken lines (C) and shear stress (compressive stress) applied to a portion of the solid electrolyte layer 12 surrounded by circular broken lines (D) can be reduced, and the breakage of the solid electrolyte layer 12 can be prevented. In particular, when the height Z of the second elastic body 42 coincides with the thickness Y of the positive electrode layer 11, there is no step on the main surface of the solid electrolyte layer 12, and the shear stress can be further reduced.

In the first embodiment, the second elastic body 42 can be omitted when the deposition amount of the lithium metal on the side surface of the positive electrode layer 11 is small and does not influence the discharge capacity, or when the possibility of a short circuit between the positive electrode layer 11 and the negative electrode layer 13 caused by the lithium metal (lithium dendrite) is small.

### (Modification of First Embodiment)

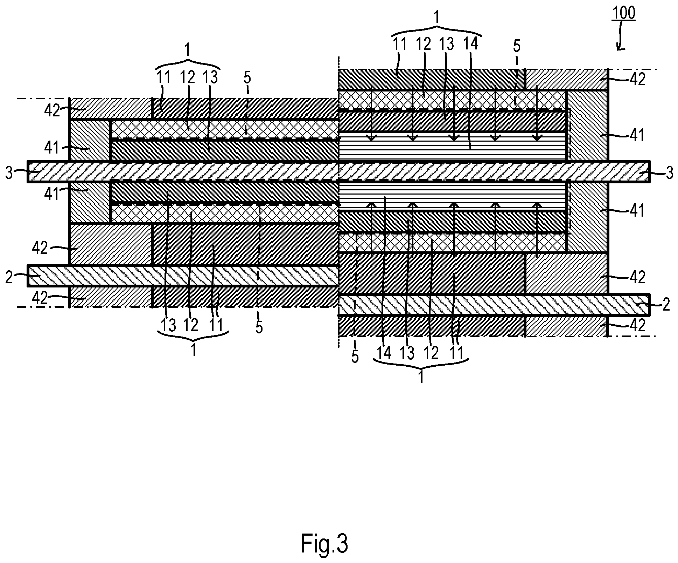

FIG. 3 is a cross-sectional view of the all-solid-state battery 100 according to a modification of the first embodiment, in which a left side of a broken line extending vertically in FIG. 3 shows a fully discharged state and a right side shows a fully charged state.

In the all-solid-state battery 100 according to the modification, the side surface of the negative electrode layer 13 (and the lithium metal layer 14) and the side surface of the solid electrolyte layer 12 form substantially the same curved surface. The solid electrolyte layer 12 is disposed such that an outer shape thereof includes the outer shape of the positive electrode layer 11 inside in plan view.

The first elastic body 41 is disposed to cover the side surface of the negative electrode layer 13 and the side surface of the solid electrolyte layer 12 during discharging. Thus, during charging, the first elastic body 41 is disposed to cover the side surface of the lithium metal layer 14, the side surface of the negative electrode layer 13, and the side surface of the solid electrolyte layer 12.

The second elastic body 42 is disposed to cover the side surface of the negative electrode layer 13 and the side surface of the solid electrolyte layer 12, and a side surface of the second elastic body 42 is disposed to form, for example, substantially the same curved surface as a side surface of the first elastic body 41. The second elastic body 42 is joined to the first elastic body 41.

In the above configuration, the solid electrolyte layer 12 is disposed to protrude outward from the positive electrode layer 11 in plan view. Accordingly, a current density at a portion of the solid electrolyte layer 12 outside the positive electrode layer 11 in plan view is significantly smaller than a current density at a portion of the solid electrolyte layer 12 inside the positive electrode layer 11 in plan view, and a potential gradient is also small. In particular, the current density and the potential gradient at the main surface of the solid electrolyte layer 12 on a positive electrode layer 11 side, that is, at the portion of the solid electrolyte layer 12 outside the positive electrode layer 11 in plan view, are significantly reduced.

As in the modification, when the side surface of the solid electrolyte layer 12 and the side surface of the negative electrode layer 13 form substantially the same curved surface (see FIG. 3), even when the lithium metal (lithium dendrite) enters between the negative electrode layer 13 and the first elastic body 41 and reaches the main surface (the interface between the solid electrolyte layer 12 and the second elastic body 42) of the solid electrolyte layer 12 on the positive electrode layer 11 side, it is possible to reduce the lithium metal from reaching the positive electrode layer 11 along the main surface of the solid electrolyte layer 12. As described above, in the modification, the short circuit between the negative electrode layer 13 and the positive electrode layer 11 can also be reduced, and the cycle durability of charge and discharge of the all-solid-state battery 100 can also be improved.

### <Effects of First Embodiment>

According to the all-solid-state battery 100 in the first embodiment, in the all-solid-state battery 100 including the negative electrode current collector foil 3, the solid electrolyte layer 12, and the positive electrode layer 11, the insulating first elastic body 41 having a frame shape that follows and surrounds the shape of the peripheral edge of the solid electrolyte layer 12 is connected to the negative electrode current collector foil 3, and the first elastic body 41 is connected to the main surface of the solid electrolyte layer 12 or the side surface of the solid electrolyte layer 12, thereby forming the internal space 5 surrounded by the solid electrolyte layer 12, the negative electrode current collector foil 3, and the first elastic body 41. The solid electrolyte layer 12 is disposed such that the outer shape thereof includes the outer shape of the positive electrode layer 11 inside in plan view. When the all-solid-state battery 100 is in the fully discharged state, the internal space 5 is filled with the negative electrode layer 13 having electrical conductivity and/or lithium ion conductivity.

According to the above configuration, the internal space 5 in which the lithium metal can be deposited between the negative electrode current collector foil 3 and the negative electrode layer 13 can be formed according to the charge amount of the all-solid-state battery 100, and thus a decrease in discharge capacity of the all-solid-state battery 100 can be prevented.

Since the lithium metal (lithium dendrite) deposited as the lithium metal layer 14 between the negative electrode current collector foil 3 and the negative electrode layer 13 is confined in the internal space 5, the growth of the lithium metal (lithium dendrite) outside the outer shape of the negative electrode layer 13 in plan view can be reduced, and the decrease in discharge capacity of the all-solid-state battery 100 can be prevented.

Further, the solid electrolyte layer 12 is disposed to protrude outward from the positive electrode layer 11 in plan view. Accordingly, the current density at the portion of the solid electrolyte layer 12 outside the positive electrode layer 11 in plan view is significantly smaller than the current density at the portion of the solid electrolyte layer 12 inside the positive electrode layer 11 in plan view, and the potential gradient is also small. Accordingly, when the side surface of the solid electrolyte layer 12 and the side surface of the negative electrode layer 13 form substantially the same curved surface (see FIG. 3), even when the lithium metal (lithium dendrite) enters between the negative electrode layer 13 and the first elastic body 41 and reaches the main surface of the solid electrolyte layer 12 on the positive electrode layer 11 side, it is possible to reduce the lithium metal from reaching the positive electrode layer 11 along the main surface of the solid electrolyte layer 12. Thus, the short circuit between the negative electrode layer 13 and the positive electrode layer 11 can be reduced.

In the first embodiment, when the all-solid-state battery 100 is in the fully charged state, the internal space 5 is filled with the negative electrode layer 13 and the lithium metal layer 14. In the case of the fully charged state (including the case of a constant charged state which is less than the fully charged state), the lithium metal layer 14 is deposited between the negative electrode current collector foil 3 and the negative electrode layer 13, and the height of the first elastic body 41 extends by the thickness of the lithium metal layer 14 as compared to when the all-solid-state battery 100 is in the fully discharged state.

According to the above configuration, the first elastic body 41 extends in accordance with the thickness (deposition amount of the lithium metal) of the lithium metal layer 14 to form the internal space 5 in which the lithium metal can be deposited, so that the deposition of the lithium metal can be facilitated and the decrease in discharge capacity of the all-solid-state battery 100 can be prevented.

In the first embodiment, the solid electrolyte layer 12 is disposed such that the outer shape thereof includes the outer shape of the negative electrode layer 13 inside in plan view, and the first elastic body 41 is sandwiched between the negative electrode current collector foil 3 and the solid electrolyte layer 12 by being connected to the main surface of the solid electrolyte layer 12.

According to the above configuration, the solid electrolyte layer 12 is disposed to protrude outward from the negative electrode layer 13 in plan view, and the first elastic body 41 is disposed to be sandwiched between the main surface of the negative electrode current collector foil 3 and the main surface of the solid electrolyte layer 12 at a position protruding outward from the negative electrode layer 13 in plan view. Accordingly, even when the lithium metal (lithium dendrite) enters the interface between the first elastic body 41 and the negative electrode layer 13, the growth of the lithium metal can be blocked by the solid electrolyte layer 12.

The current density at the portion of the solid electrolyte layer 12 outside the negative electrode layer 13 in plan view is significantly lower than the current density at the portion of the solid electrolyte layer 12 inside the negative electrode layer 13 in plan view. Accordingly, the potential gradient in the plane direction of the interface between the first elastic body 41 and the solid electrolyte layer 12 is significantly smaller than a potential gradient in a thickness direction of the interface between the first elastic body 41 and the lithium metal layer 14 and a potential gradient in a thickness direction of the interface between the first elastic body 41 and the negative electrode layer 13. Accordingly, even when the lithium metal (lithium dendrite) grows to the junction position of the interface between the first elastic body 41 and the negative electrode layer 13 and the interface between the first elastic body 41 and the solid electrolyte layer 12, the lithium metal (lithium dendrite) can be prevented from entering the interface between the first elastic body 41 and the solid electrolyte layer 12. As described above, the short circuit between the negative electrode layer 13 and the positive electrode layer 11 can be reduced, and the cycle durability of charge and discharge of the all-solid-state battery 100 can be improved.

In the first embodiment, the insulating second elastic body 42 is disposed to cover the side surface of the positive electrode layer 11.

Accordingly, it is possible to prevent deposition of the lithium metal on the side surface of the positive electrode layer 11 during discharging and prevent a decrease in discharge capacity.

In the first embodiment, the positive electrode layer 11 and the second elastic body 42 are sandwiched between the solid electrolyte layer 12 and the positive electrode current collector foil 2, and the height of the second elastic body 42 coincides with the thickness of the positive electrode layer 11.

Accordingly, it is possible to reduce the shear stress applied to the boundary between the portion of the solid electrolyte layer 12 outside the positive electrode layer 11 and the negative electrode layer 13 and the portion of the solid electrolyte layer 12 inside the positive electrode layer 11 and the negative electrode layer 13 in plan view. In particular, when the height Z of the second elastic body 42 coincides with the thickness Y of the positive electrode layer 11, there is no step on the main surface of the solid electrolyte layer 12, and the shear stress can be further reduced.

### [Second Embodiment]

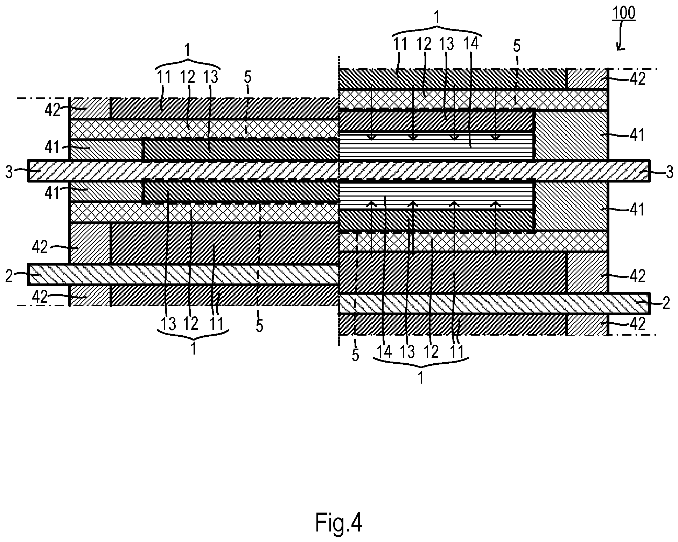

FIG. 4 is a cross-sectional view of the all-solid-state battery 100 according to a second embodiment, in which a left side of a broken line extending vertically in FIG. 4 shows a fully discharged state and a right side shows a fully charged state. The all-solid-state battery 100 according to the second embodiment is similar to that of the first embodiment in that the solid electrolyte layer 12 is disposed such that the outer shape thereof includes the outer shape of the positive electrode layer 11 and the outer shape of the negative electrode layer 13 inside in plan view.

However, in the second embodiment, the negative electrode layer 13 (and the lithium metal layer 14) is disposed such that the outer shape thereof is included inside the outer shape of the positive electrode layer 11 in plan view. Accordingly, a thickness of the first elastic body 41 in the plane direction can be set to be thicker than a thickness of the second elastic body 42 in the plane direction by an amount of reduction in a size of the negative electrode layer 13 in the plane direction.

Accordingly, the expansion of the lithium metal layer 14 in the plane direction can be further prevented, and thus a decrease in discharge capacity can be further reduced as compared with the first embodiment. Since the thickness of the first elastic body 41 in the plane direction can be made thicker than that of the first embodiment, the short circuit between the negative electrode layer 13 and the positive electrode layer 11 can be further reduced.

### [Third Embodiment]

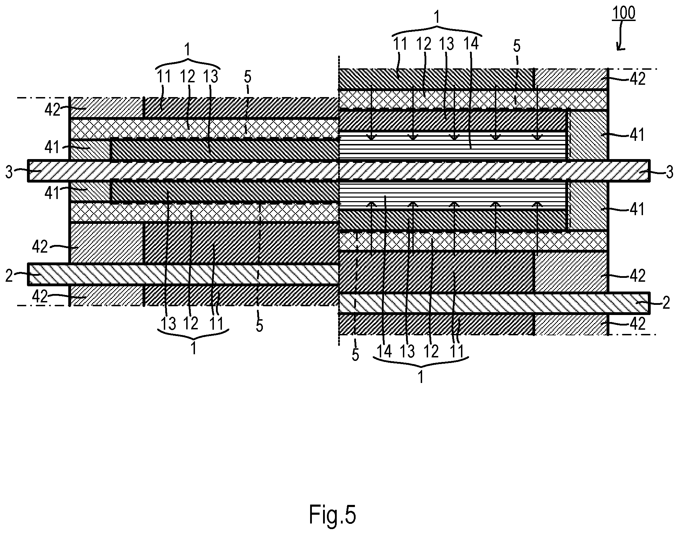

FIG. 5 is a cross-sectional view of the all-solid-state battery 100 according to a third embodiment, in which a left side of a broken line extending vertically in FIG. 5 shows a fully discharged state and a right side shows a fully charged state. The all-solid-state battery 100 according to the third embodiment is similar to that of the first embodiment in that the solid electrolyte layer 12 is disposed such that the outer shape thereof includes the outer shape of the positive electrode layer 11 and the outer shape of the negative electrode layer 13 inside in plan view.

However, in the third embodiment, the negative electrode layer 13 (and the lithium metal layer 14) is disposed such that the outer shape thereof includes the outer shape of the positive electrode layer 11 inside in plan view.

Accordingly, the thickness of the lithium metal layer 14 can be reduced to the extent that an area of the negative electrode layer 13 (and the lithium metal layer 14) in plan view is larger than an area of the positive electrode layer 11, and an amount of expansion and contraction of the first elastic body 41 can be reduced. Accordingly, it is possible to increase the durability of the first elastic body 41 and reduce a short circuit due to aged deterioration.

### [Fourth Embodiment]

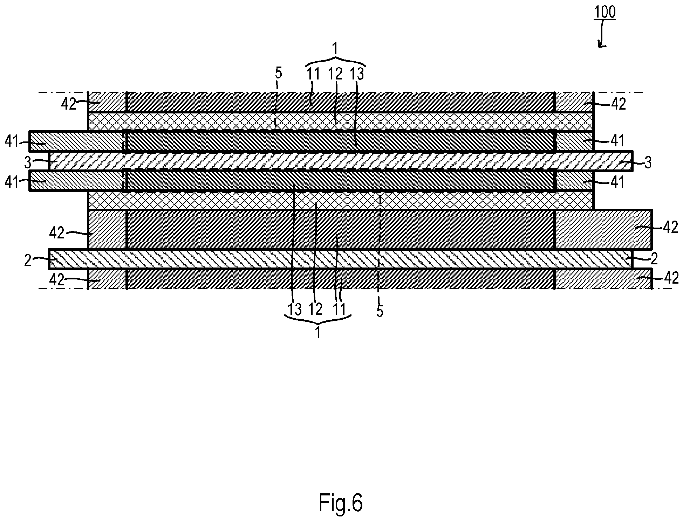

FIG. 6 is a cross-sectional view of the all-solid-state battery 100 according to a fourth embodiment. A structure of the all-solid-state battery 100 according to the fourth embodiment is the same as that of the first embodiment, but the first elastic body 41 is disposed to be exposed to an outside of at least one side (or all sides) of the negative electrode current collector foil 3 in plan view. Alternatively, a pair of first elastic bodies 41 sandwiching the negative electrode current collector foil 3 are disposed to be exposed to the outside of one side (or all sides) of the negative electrode current collector foil 3 in plan view. Accordingly, even when the negative electrode current collector foil 3 and the positive electrode current collector foil 2 are deformed, a portion of the negative electrode current collector foil 3 covered with the first elastic body 41 does not come into contact with the positive electrode current collector foil 2, and a short circuit between the negative electrode current collector foil 3 and the positive electrode current collector foil 2 can be reduced.

In the fourth embodiment, the second elastic body 42 is disposed to be exposed to an outside of at least one side (or all sides) of the positive electrode current collector foil 2 in plan view. Alternatively, a pair of second elastic bodies 42 sandwiching the positive electrode current collector foil 2 are disposed to be exposed to the outside of one side (or all sides) of the positive electrode current collector foil 2 in plan view. Accordingly, even when the negative electrode current collector foil 3 and the positive electrode current collector foil 2 are deformed, a portion of the positive electrode current collector foil 2 covered with the second elastic body 42 does not come into contact with the negative electrode current collector foil 3, and a short circuit between the negative electrode current collector foil 3 and the positive electrode current collector foil 2 can be reduced.

Although the embodiments of the present invention have been described above, the above embodiments merely exemplify some of application examples of the present invention and do not intend to limit the technical scope of the present invention to the specific configurations of the above embodiments. Furthermore, the above embodiments can be combined as appropriate.

## Claims

1. An all-solid-state battery comprising:
a negative electrode current collector foil;
a solid electrolyte layer; and
a positive electrode layer, wherein
the negative electrode current collector foil is connected to an insulating first elastic body having a frame shape that follows and surrounds a shape of a peripheral edge of the solid electrolyte layer,
the first elastic body is connected to a main surface of the solid electrolyte layer or a side surface of the solid electrolyte layer to form an internal space surrounded by the solid electrolyte layer, the negative electrode current collector foil, and the first elastic body,
the solid electrolyte layer is disposed such that an outer shape thereof includes an outer shape of the positive electrode layer inside in plan view, and
when the all-solid-state battery is in a fully discharged state,
the internal space is filled with a negative electrode layer having electrical conductivity and/or lithium ion conductivity.

2. The all-solid-state battery according to claim 1, wherein
when the all-solid-state battery is in a fully charged state,
the internal space is filled with the negative electrode layer and a lithium metal layer.

3. The all-solid-state battery according to claim 2, wherein
in the fully charged state,
the lithium metal layer is deposited between the negative electrode current collector foil and the negative electrode layer, and
a height of the first elastic body extends by a thickness of the lithium metal layer as compared to when the all-solid-state battery is in the fully discharged state.

4. The all-solid-state battery according to any one of claims 1 to 3, wherein
the first elastic body is disposed to be exposed outside from at least one side of the negative electrode current collector foil in plan view.

5. The all-solid-state battery according to any one of claims 1 to 4, wherein
the solid electrolyte layer is disposed such that an outer shape thereof includes an outer shape of the negative electrode layer inside in plan view, and
the first elastic body is sandwiched between the negative electrode current collector foil and the solid electrolyte layer by being connected to a main surface of the solid electrolyte layer.

6. The all-solid-state battery according to claim 5, wherein
an insulating second elastic body is disposed to cover a side surface of the positive electrode layer.

7. The all-solid-state battery according to claim 6, wherein
the positive electrode layer and the second elastic body are sandwiched between the solid electrolyte layer and a positive electrode current collector foil, and
a height of the second elastic body coincides with a thickness of the positive electrode layer.

8. The all-solid-state battery according to claim 7, wherein
the second elastic body is disposed to be exposed outside from at least one side of the positive electrode current collector foil in plan view.
